# EUROPÄISCHE PATENTANMELDUNG

(11) **EP 2 740 392 A1**
(43) Veröffentlichungstag der Anmeldung: **11.06.2014**
(21) Anmeldenummer: 13195230.1
(22) Anmeldetag: 02.12.2013
(51) Int. Cl.: A47J 36/10, A47J 43/046, A47J 43/07

(54) **Elektrisch betriebene Küchenmaschine**

(30) Priorität: 05.12.2012 DE 102012111805
(71) Anmelder: Vorwerk & Co. Interholding GmbH, 42275 Wuppertal (DE)
(72) Erfinder: Starflinger, Frank, 44793 Bochum (DE)
(74) Vertreter: Müller, Enno

(57) **Zusammenfassung**

Die Erfindung betrifft eine elektrisch betriebene Küchenmaschine (1) mit einem Gargefäß (6) und einem Deckel (10) für das Gargefäß (6), wobei der Deckel (10) in der Verschlussstellung gegen das Gargefäß (6) verriegelbar ist, wobei weiter das Gargefäß (6) einen Gargefäßboden und eine sich vom Boden nach oben erstreckende Gargefäßwandung (12) aufweist und die Verriegelung aus einem zum Übergreifen des Deckels (10) bestehenden Verriegelungsteil (17) gebildet ist, das durch Drehen aus einer Freigabestellung in die Verriegelungsstellung und umgekehrt verlagerbar ist, wobei das Verriegelungsteil (17) mit einem gehäuseseitig abgestützten Lagerteil (18) steckverbunden ist, bei in einer Längsrichtung des Lagerteils (18) mehrfacher Abstützung des Verriegelungsteils (17) an dem Lagerteil (18). Um eine montagegünstige Ausgestaltung bezüglich der Anordnung des Verriegelungsteiles zu erreichen, wird vorgeschlagen, dass das Lagerteil (18) in seiner Längsrichtung mehrteilig ausgebildet ist und dass ein das Verriegelungsteil (17) abstützender Lagerteilabschnitt (19) gegenüber einem weiteren Lagerteilabschnitt (25) zur axialen Ausrichtung des Verriegelungsteils (17) jedenfalls im Zuge der Montage unterschiedlich anbringbar ist.

## Beschreibung

Die Erfindung betrifft eine elektrisch betriebene Küchenmaschine mit einem Gargefäß und einem Deckel für das Gargefäß, wobei der Deckel in der Verschlussstellung gegen das Gargefäß verriegelbar ist, wobei weiter das Gargefäß einen Gargefäßboden und eine sich vom Boden nach oben erstreckende Gargefäßwandung aufweist und die Verriegelung aus einem zum Übergreifen des Deckels bestehenden Verriegelungsteil gebildet ist, das durch Drehen aus einer Freigabestellung in die Verriegelungsstellung und umgekehrt verlagerbar ist, wobei das Verriegelungsteil mit einem gehäuseseitig abgestützten Lagerteil steckverbunden ist, bei in einer Längsrichtung des Lagerteils mehrfacher Abstützung des Verriegelungsteiles an dem Lagerteil.

Küchenmaschinen der in Rede stehenden Art sind bekannt. Diese dienen insbesondere im Haushaltsbereich zur Herstellung oder Vorbereitung von Speisen, wozu das der Küchenmaschine zuordbare Gargefäß ausgelegt ist zur Aufnahme von Nahrungsmitteln, beispielsweise Gargütern oder Fluiden. Insbesondere bei beheizbaren Gargefäßen für Küchenmaschinen werden insbesondere im Zuge des Garprozesses teilweise hohe Drücke innerhalb des Gefäßes erreicht. Ist dem Gargefäß weiter insbesondere im Bodenbereich ein Rührwerk zugeordnet, so wirkt im Rührbetrieb gegebenenfalls eine Flüssigkeitssäule unterseitig gegen den auf das Gargefäß aufgesetzten Deckel. Letzterer muss entsprechend an dem Gefäß und/oder an dem Gehäuse der Maschine verriegelt werden, welche Verriegelung die in dem Gargefäß gegebenenfalls entstehenden Drücke beziehungsweise die auf den Deckel einwirkenden Kräfte aufnehmen kann. In diesem Zusammenhang wird beispielsweise auf die DE 102011050286 A1 verwiesen. Aus dieser Patentanmeldung ist eine Küchenmaschine der in Rede stehenden Art bekannt, bei welcher das im Wesentlichen frei aus dem Gehäuse der Küchenmaschine ragende Verriegelungsteil insbesondere innerhalb des Gehäuses mit einem Lagerteil steckverbunden ist, über welches Lagerteil sich das Verriegelungsteil in axialer Erstreckung eines mit dem Lagerteil zusammenwirkenden Abschnitts abstützt. Das Verriegelungsteil ist bevorzugt gegenüber dem gehäusefesten Lagerteil drehbeweglich um eine Längsachse des Verriegelungsteiles. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Im Hinblick auf den bekannten Stand der Technik wird eine technische Problematik insbesondere in einer montagegünstigen Ausgestaltung bezüglich der Anordnung des Verriegelungsteiles gesehen.

Eine mögliche Lösung der Aufgabe ist nach einem ersten Erfindungsgedanken bei einer Küchenmaschine gegeben, bei welcher darauf abgestellt ist, dass das Lagerteil in seiner Längsrichtung mehrteilig ausgebildet ist und dass ein das Verriegelungsteil abstützender Lagerteilabschnitt gegenüber einem weiteren Lagerteilabschnitt zur axialen Ausrichtung des Verriegelungsteiles jedenfalls im Zuge der Montage unterschiedlich anbringbar ist. Zufolge der vorgeschlagenen Ausgestaltung ist eine günstige Montage des Verriegelungsteiles, insbesondere eine günstige Justage des Verriegelungsteiles ermöglicht, welche Justage gegebenenfalls auch nach einer Erstmontage durchführbar ist. Zufolge der mehrteiligen Ausbildung des Lagerteils, insbesondere der Ausbildung eines das Verriegelungsteil abstützenden Lagerteilabschnittes ist über eine entsprechende Anbringung, insbesondere Ausrichtung dieses Lagerteilabschnittes relativ zu dem weiteren Lagerteilabschnitt die Drehachse des abschließend anzuordnenden Verriegelungsteiles ausrichtbar. Etwaige Toleranzen im Bereich des Lagerteiles beziehungsweise der Lagerteilabschnitte und/oder des Verriegelungsteiles und/oder des Gehäuses und/oder des Gargefäßes mit dem Gargefäßdeckel sind so bei einfacher Handhabung ausgleichbar. Die hierdurch erreichbare Justierung erfordert keine mechnische Bearbeitung der Komponenten, so beispielsweise eine spanende Bearbeitung. Hier ist allein die relative Ausrichtung des die Abstützung für das Verriegelungsteil erbringenden Lagerteilabschnittes zu dem insbesondere gehäuseseitig festgelegten Lagerteilabschnitt ermöglicht. Die Justage ist weiter hierdurch durch den Anwender leicht durchzuführen. Darüber hinaus erweist sich die vorgeschlagene Lösung als herstellungs- und kostengünstig. Bevorzugt wird vor einer Anbringung des die Abstützung des Verriegelungsteiles erbringenden Lagerteilabschnittes die erforderliche Achsausrichtung festgestellt und hiernach der Lagerteilabschnitt unter entsprechender Ausrichtung desselben und/oder unter Nutzung eines entsprechend ausgebildeten, bevorzugt vorrätig gehaltenen Lagerteilabschnittes festgelegt. Diese Festlegung des Lagerteilabschnittes ist in bevorzugter Ausgestaltung nicht, zumindest nicht werkzeuglos lösbar. In alternativer Ausgestaltung ist zur Ermöglichung einer Nachjustage der Lagerteilabschnitt zumindest so weit lösbar, dass eine Anbringung desselben in einer geänderten Ausrichtung ermöglicht ist.

In einer weiter bevorzugten Ausgestaltung ist vorgesehen, dass ein Lagerteilabschnitt, insbesondere der das Verriegelungsteil zumindest teilweise abstützende Lagerteilabschnitt als Exzenter ausgebildet ist. Entsprechend ist zufolge einer Drehung des Lagerteilabschnittes um eine zentrale Lagerteil-Längsachse relativ zu dem hierzu feststehenden Lagerteilabschnitt der Abstützbereich für das Verriegelungsteil unterschiedlich bezüglich des radialen Abstandes zu der Achse einstellbar, womit eine entsprechende Justierung des abschließend zu befestigenden Verriegelungsteiles ermöglicht ist. So ist weiter bevorzugt insbesondere der mit dem Verriegelungsteil zusammenwirkende Exzenter als ein zur Mittenachse exzentrisch angeordneter Kugelkopf ausgeformt.

Weiter bevorzugt liegen zur Montage unterschiedlich gestufte, Ausgleichselemente bildende Lagerteilabschnitte vor mit mehr oder weniger Konzentrizität des Exzenters beziehungsweise der Kugel zur Lagerteilabschnittachse, um so unterschiedliche Winkelversätze auszugleichen. Hierbei beeinflusst die Höhe der Konzentrizität die Größe des Winkelversatzes, wobei die rotatorische Lage des bevorzugt kugelkopfförmigen Exzenters des Lagerteilabschnittes den räumlichen Versatz ausgleicht. Der Lagerteilabschnitt beziehungsweise der anhand einer vorab vorgenommenen Vermessung der Achsabweichung ermittelte Lagerteilabschnitt wird bevorzugt durch Verdrehen um die eigene Achse in die entsprechende Winkellage verbracht und in dieser mit dem weiteren Lagerteilabschnitt verbunden.

Bevorzugt ist weiter ein Lagerteilabschnitt in einer Längsrichtung des Lagerteils mit dem anderen Lagerteilabschnitt steckverbindbar. Hierbei kann es sich weiter um eine kraftschlüssige, alternativ um eine formschlüssige Verbindung handeln, wobei im Falle einer formschlüssigen Verbindung eine Rastverbindung bevorzugt wird. Jedenfalls ist diesbezüglich weiter bevorzugt, dass die Steckverbindung nicht oder zumindest nicht werkzeuglos aufhebbar ist. Die Steckverbindung wirkt in bevorzugter Ausgestaltung sowohl in Axialrichtung als auch in Umfangsrichtung, so dass die gewählte Ausrichtung des Lagerteilabschnittes nicht oder zumindest nicht im Rahmen üblicher Krafteinwirkungen insbesondere auf das Verriegelungsteil während der üblichen Nutzung der Küchenmaschine verlassen wird.

Der in Bezug auf das Verriegelungsteil vordere Lagerteilabschnitt ist bevorzugt der Lagerteilabschnitt, der unterschiedlich anbringbar ist. Insofern ist der Lagerteilabschnitt zur Justierung gewählt, der im Zuge der Montage günstig erfassbar beziehungsweise erreichbar ist. Die Justierung kann demzufolge weiter nach einer - mit Ausnahme des oder der Verriegelungsteile - abgeschlossenen Gerätemontage erfolgen, womit die durch die Einzel- und Montagetoleranzen hervorgerufenen Winkelverzüge in günstiger Weise auszugleichen sind.

Insbesondere zur Sicherung der gefundenen Ausrichtung des Lagerteilabschnittes an dem weiteren Lagerteilabschnitt ist in weiter bevorzugter Ausgestaltung der Lagerteilabschnitt in seiner Längsrichtung außenseitig mit längs und/oder quer ausgerichtete Blockierungsausformungen versehen, zur entsprechenden Sicherung des Lagerteilabschnittes insbesondere in Abzugsrichtung wie auch weiter bevorzugt in Umfangsrichtung. Diese Blockierungsausformungen sind weiter bevorzugt bei Ausgestaltung des Lagerteilabschnittes als Kunststoffspritzteil einteilig und materialeinheitlich mit dem Lagerteilabschnitt ausgebildet. Die Blockierungsausformungen sind weiter bevorzugt gebildet durch über eine Steckachse nach radial außen vorstehende Vorsprünge oder dergleichen.

Der feststehende Lagerteilabschnitt weist in bevorzugter Ausgestaltung zu den Blockierungsausformungen entsprechend längs- und/oder quer ausgerichtete Blockierungsaufnahmen auf, so insbesondere in Form von in der Umfangswandung zur Aufnahme der bevorzugten Steckachse des anderen Lagerteilabschnittes ausgebildeten Frei- oder Hinterschnitten, in welchen Blockierungsausformungen zur Festlegung des einen Lagerteilabschnittes eingreifen können.

Insbesondere zur günstigen Handhabung des einen Lagerteilabschnittes im Zuge der Festlegung und Ausrichtung an den feststehenden Lagerteilabschnitt weist der bewegliche Lagerteilabschnitt eine axial gerichtete Werkzeugaufnahme auf, die weiter bevorzugt sowohl für den Steckvorgang als auch für die Drehausrichtung des einen Lagerteilabschnittes ausgebildet ist.

Diese Werkzeugaufnahme erstreckt sich in bevorzugter Ausgestaltung ausgehend von einer Stirnseite des freien Endes des beweglichen Lagerteilabschnittes, ist entsprechend gut zugänglich. Mit Ansetzen und Befestigen des Verriegelungsteiles an diesem Lagerteilabschnitt ist die Werkzeugaufnahme in bevorzugter Ausgestaltung überdeckt und so in einer Verstecktlage gehalten.

Als vorteilhaft erweist sich diesbezüglich, dass die Werkzeugaufnahme als Innenmehrkant ausgebildet ist, so insbesondere als Innenvierkant oder Innensechskant. Alternativ kann die Werkzeugaufnahme auch zum Ansetzen eines Schraubendrehers ausgebildet sein, so weiter entsprechend bevorzugt schlitzförmig oder kreuzschlitzförmig.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos, insbesondere 1,01-Fach etc. einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: eine Küchenmaschine der in Rede stehenden Art in Seitenansicht mit einem deckelverschlossenen Gargefäß;
- Fig. 2: die Ansicht gemäß Pfeil II in Figur 1;
- Fig. 3: die Draufsicht zu Figur 2;
- Fig. 4: den schematisch dargestellten Schnitt gemäß der Linie IV-IV in Figur 3, eine Deckelverriegelungsstellung betreffend;
- Fig. 5: eine der Figur 4 entsprechende Darstellung, die Deckelentriegelungsstellung betreffend;
- Fig. 6: eine der Figur 5 entsprechende Darstellung bei abgenommenem Deckel;
- Fig. 7: in explosionsperspektivischer Darstellung ein zweigeteiltes Lagerteil und ein dem Lagerteil zuordbares Verriegelungsteil;

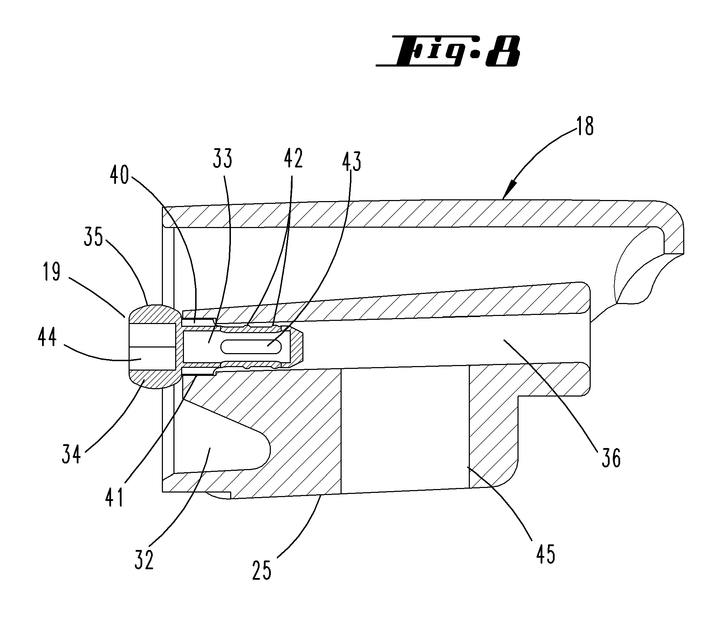

- Fig. 8: den Schnitt gemäß der Linie VIII-VIII in Figur 7 durch das Lagerteil;

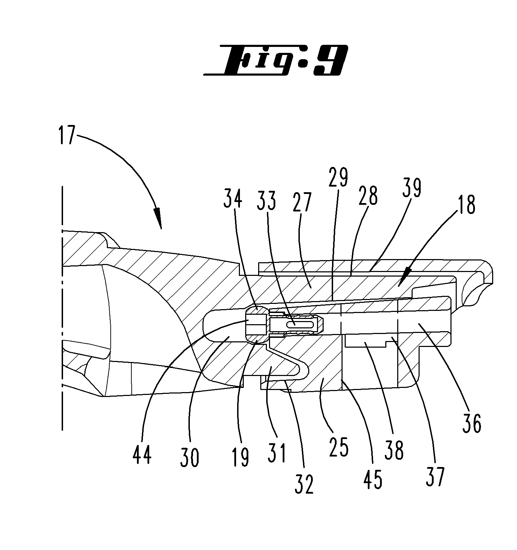

- Fig. 9: eine der Figur 8 entsprechende Schnittdarstellung, jedoch bei zugeordnetem Verriegelungsteil;

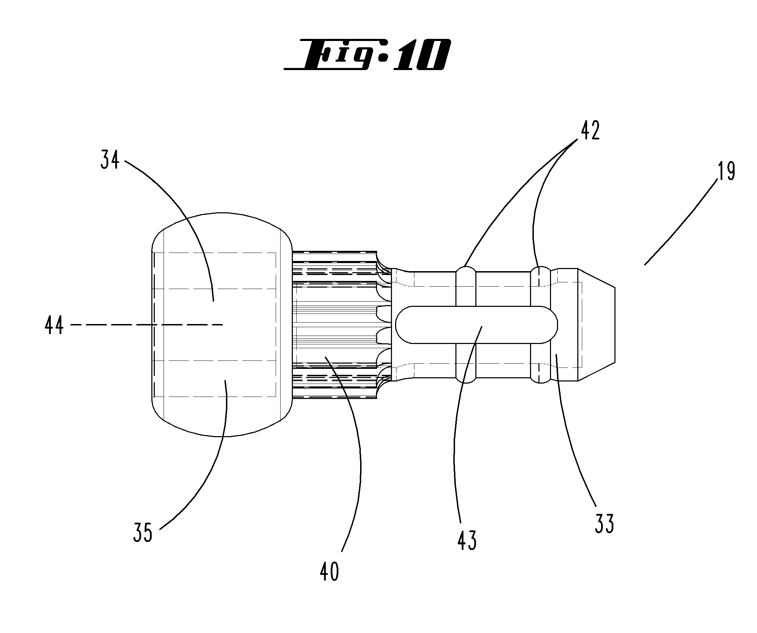

- Fig. 10: in einer Seitenansicht einen Lagerteilabschnitt des Lagerteils;

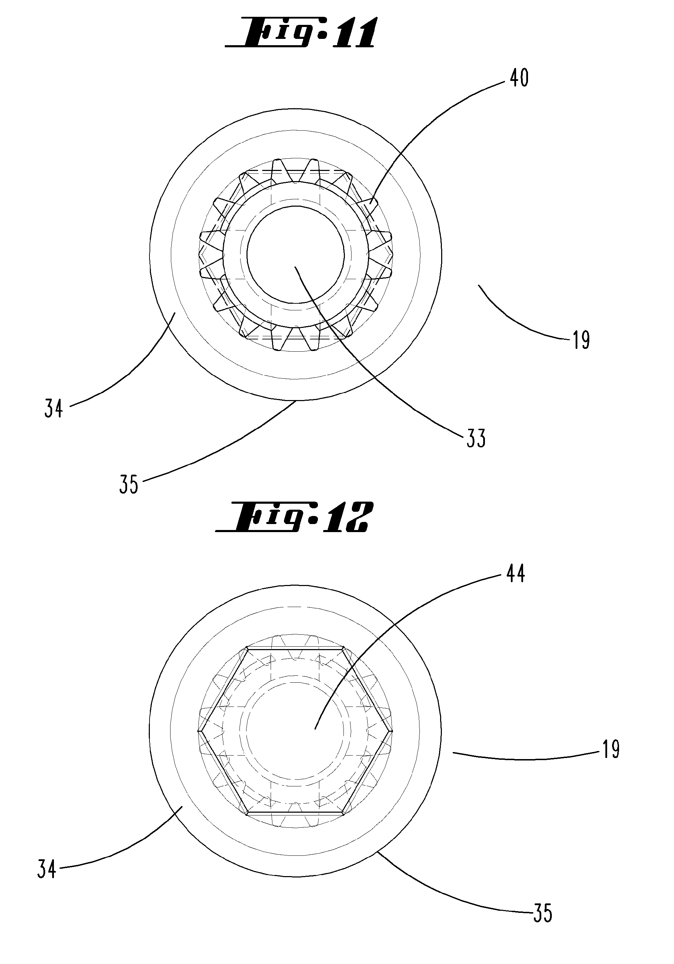

- Fig. 11: die Stirnansicht hierzu;
- Fig. 12: die mit Bezug zu Figur 11 gegenüberliegende Stirnansicht;
- Fig. 13: den Lagerteilabschnitt in einer Längsschnittdarstellung;
- Fig. 14: den Lagerteilabschnitt in einer perspektivischen Darstellung.

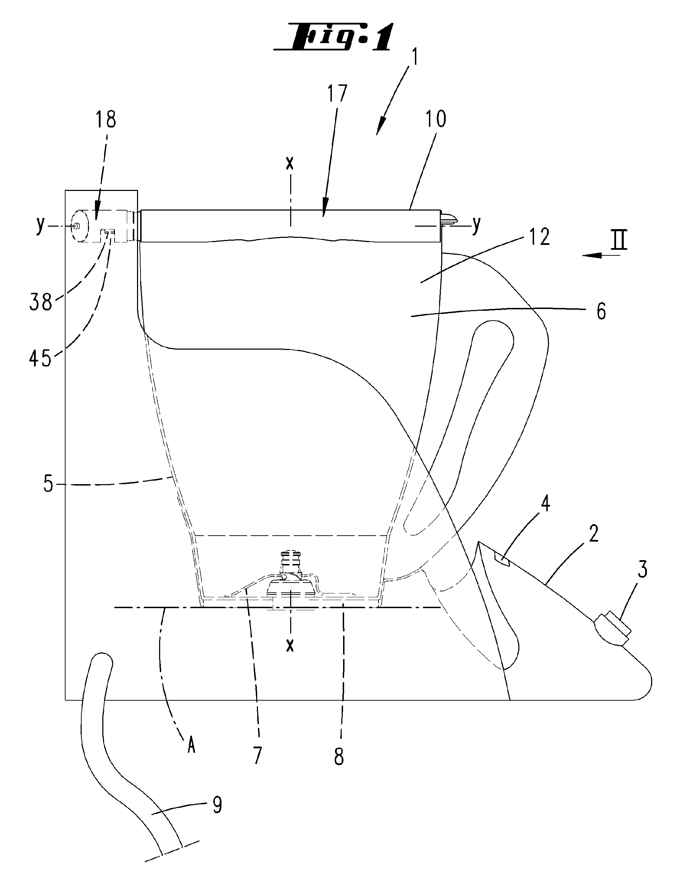

Dargestellt und beschrieben ist zunächst mit Bezug zu Fig. 1 eine elektrisch betriebene Küchenmaschine 1. Diese weist zunächst ein Bedienfeld 2 auf mit bevorzugt einer Mehrzahl von Reglern und/oder Tastern 3 sowie bevorzugt ein Display 4 zum Anzeigen der insbesondere über die Regler und/oder Taster 3 einzustellenden Parameter.

Des Weiteren verfügt die Küchenmaschine 1 über eine Gefäßaufnahme 5.

In diese ist ein Gefäß 6 in Form eines Gargefäßes insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des Rührwerkantriebs sowie einer weiter bevorzugt behälterbodenseitig vorgesehenen Heizung 8 und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

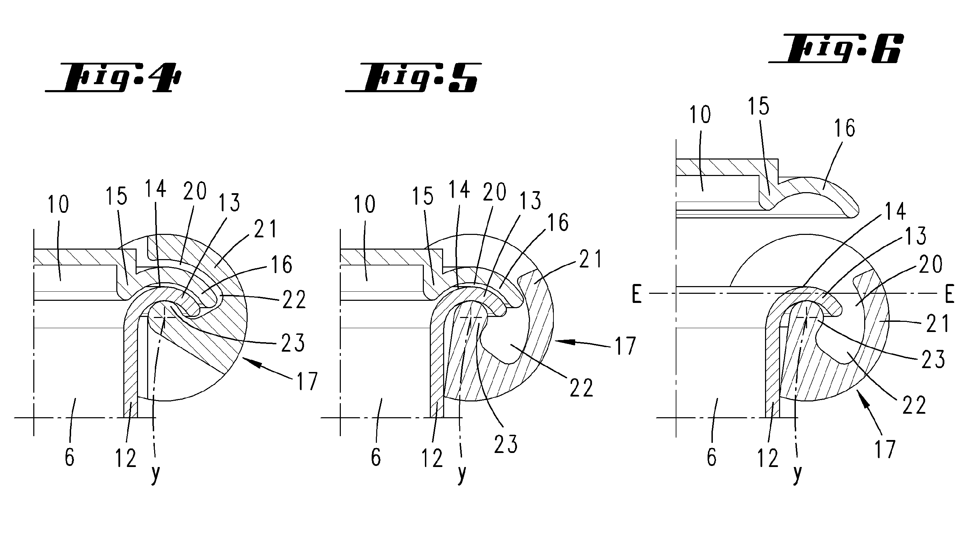

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzterer ist mit Bezug auf einen Vertikalquerschnitt (vgl. Fig. 4) kreislinienabschnittförmig gebildet, weiter bevorzugt halbkreislinienförmig, mit einer nach vertikal oben gerichteten Wölbungsfläche 14.

Der Deckel 10 ist unterseitig, d.h. in Zuordnungsstellung dem Gefäßinneren zugewandt, mit einem sich im Wesentlichen koaxial zur Vertikalachse x erstreckenden umlaufenden Kragen 15 versehen. Fußseitig des Kragens 15, entsprechend entlang der in Zuordnungsstellung dem Gefäßinneren zugewandten Kragenrandkante, ist ein nach radial außen sich erstreckender Deckelrand 16 angeformt. Dieser erstreckt sich mit Bezug auf einen Vertikalschnitt gemäß Fig. 6 angepasst an den Gefäßrand 13 kreislinienabschnittförmig, weiter bevorzugt in Zuordnungsstellung des Deckels 10 unter konzentrischem Verlauf zu dem Gefäßrand 13. In der Zuordnungsstellung stützt sich der Deckel 10 über dessen Deckelrand 16 auf dem Gefäßrand 13 ab (vgl. Fig. 4).

Wenngleich nicht dargestellt, ist an dem Deckel 10 oder im Bereich des Gefäßrandes 13 eine Dichtung vorgesehen, insbesondere zur fluiddichten Anordnung des Deckels 10 auf dem Gefäß 6. In üblicher Weise besteht eine solche Dichtung aus einem Weichkunststoffmaterial, bspw. aus einem thermoplastischen Elastomer.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 ggf. hohe Kräfte bspw. durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt. Letztere erstreckt sich weiter parallel zu einer durch den Deckelrand 16 bzw. durch den Gefäßrand 13 aufgespannten Ebene E.

Weiter ist die Anordnung der Drehachse y bevorzugt so gewählt, dass diese sich radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt gemäß Fig. 4 den Mittelpunkt des kreislinienabschnittförmigen Gefäßrandes 13 schneidet.

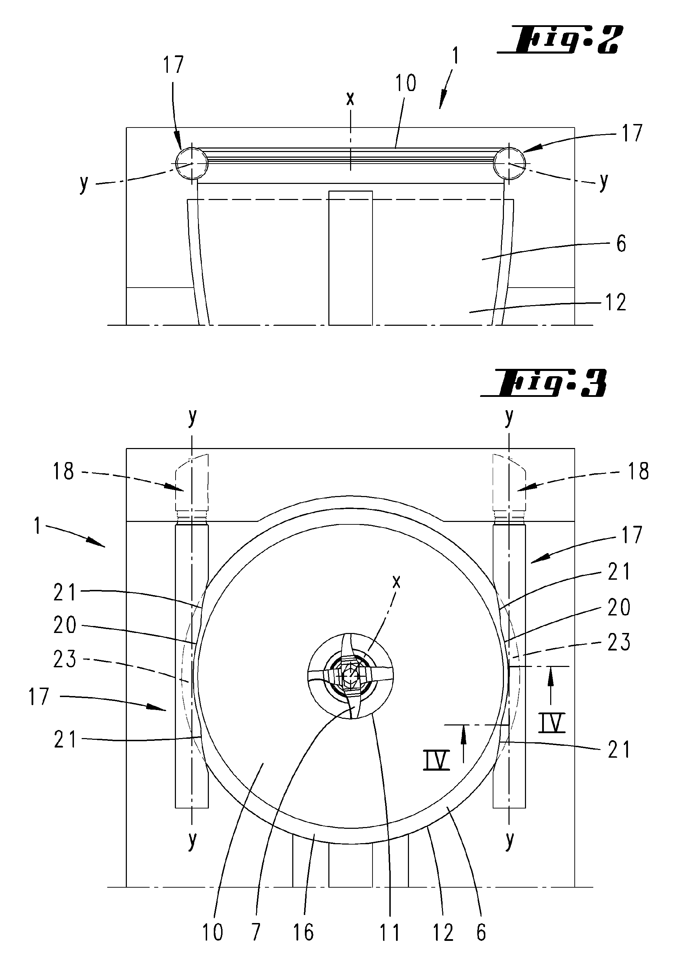

Das insgesamt langgestreckt zylinderförmige Verriegelungsteil 17 ist zufolge der vorbeschriebenen Anordnung und Ausrichtung der Drehachse y derart angeordnet, dass dieses mit Bezug auf eine Draufsicht (vgl. Fig. 3) den Gargefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Das insgesamt wellenartige Verriegelungsteil 17 ist weiter mit einer sich in dem dargestellten Ausführungsbeispiel etwa über 60 % bis 70 % der axialen Länge des Verriegelungsteiles 17 erstreckenden Höhlung 20 versehen. Dies ist so gestaltet, dass sich jeweils zugeordnet dem in axialer Richtung betrachteten Endbereich in der Höhlung 20 mit Bezug auf einen Vertikalschnitt, d.h. mit Bezug auf einen senkrecht zur Drehachse y betrachteten Schnitt, ein kreisbogenartiger Übergreifabschnitt 21 einstellt. Dieser erstreckt sich konzentrisch zur Drehachse y, wobei der von dem Übergreifabschnitt 21 überdeckte Höhlungsabschnitt 22 hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 21 erstreckt sich kreisbogenartig, in dem dargestellten Ausführungsbeispiel über einen Bereich von etwa 80° bis 85°.

Die sich zufolge der vorbeschriebenen Ausgestaltung einstellenden Verriegelungsbereiche im Bereich der Übergreifabschnitte 21 sind in Erstreckungsrichtung der Drehachse y betrachtet um ein Maß zueinander beabstandet, welches in dem dargestellten Ausführungsbeispiel etwa einem Drittel des Deckeldurchmessers entspricht.

Weiter in Erstreckungsrichtung der Drehachse y betrachtet ist mittig zwischen den Übergreifabschnitten 21 ein Auflagebereich 23 ausgebildet. Dieser ist bevorzugt kugelkopfartig oder ballenartig ausgeformt, insbesondere mit Bezug auf einen Vertikalschnitt gemäß Fig. 4 mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/oder des Deckelrandes 16 in einem Vertikalschnitt.

In dem Auflagebereich 23 ist die Höhlung 20 so gebildet, dass in einer Deckelfreigabestellung gemäß Fig. 5 sich oberhalb des Auflagebereiches 23 ein freies vertikales Anheben bzw. Absenken des Gefäßes 6 sowie des Deckels 10 erreichen lässt. Zufolge der bevorzugt insgesamt kreisscheibenförmigen Ausgestaltung des Deckels 10 ist dieser ungerichtet dem Gefäßrand zuordbar.

Die Drehachse y des Verriegelungsteils 17 erstreckt sich durch das Zentrum des Auflagebereiches 23, um so bei einer Rotation des Verriegelungsteiles 17 die Gefäßposition konstant zu halten.

In der Zuordnungsstellung (vgl. Fig. 4) lagert auf der ballig bis kugelig ausgeführten Fläche des Auflagebereiches 23 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

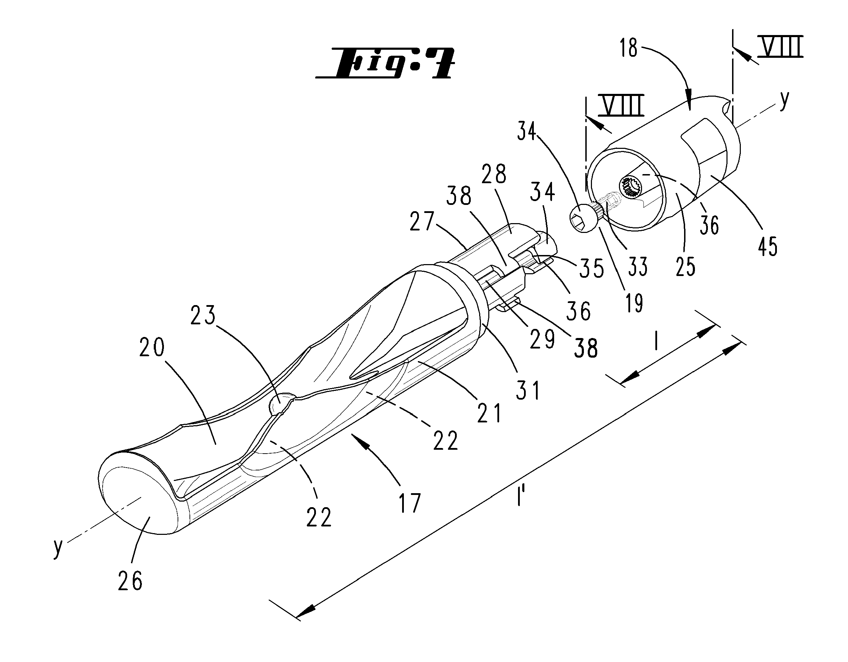

Wie insbesondere aus der Darstellung in Fig. 7 zu erkennen, ist dem Verriegelungsteil 17 ein Lagerteil 18 zugeordnet. Das Verriegelungsteil 17 ist hierbei bevorzugt stangenartig, entsprechend langgestreckt und im Wesentlichen als rotationssymmetrisches Teil gebildet, weist weiter die vorbeschriebenen Übergreif- und Hüllungsabschnitte 21, 22 sowie Auflagebereich 23 und Übergriff 24 auf.

Gegenüberliegend zu dem frei auskragenden Ende 26 des Verriegelungsteils 17 ist einstückig und bevorzugt materialeinheitlich ein Einsteckabschnitt 27 angeformt, mit einer in Axialrichtung betrachteten Länge l, die bevorzugt einem Drittel bis einem Fünftel, weiter bevorzugt einem Viertel der Gesamtlänge l' des Verriegelungsteils 17 entspricht.

Der Einsteckabschnitt 27 ist weiter bevorzugt konzentrisch zur Drehachse y angeordnet und weist im Querschnitt bevorzugt eine Omega-Form auf, mit einer Umfangsfläche 28, deren Radius bevorzugt Dreiviertel bis Vierfünftel des größten Radius des Verriegelungsteils 17 entspricht. Durch die im Wesentlichen omega-förmige Querschnittsgestaltung bedeckt der Einsteckabschnitt 27 bevorzugt über dessen gesamte axiale Länge l in Umfangsrichtung nur einen Teilabschnitt einer Kreisfläche. So erstreckt sich der Einsteckabschnitt 27 in Umfangsrichtung bevorzugt über einen Winkel von 200° bis 210°.

Weiter ist der Einsteckabschnitt 27 zentral, in Betriebsstellung die Drehachse y aufnehmend, mit einer teilgeöffneten Aufnahme 29 in Form eines Schlitzes versehen. Diese Aufnahme 29 öffnet in Richtung der durch den Einsteckabschnitt 27 nicht bedeckten Kreisfläche und erstreckt sich bevorzugt über die gesamte Länge l des Einsteckabschnittes 27. Das dem freien Stirnbereich des Einsteckabschnittes 27 abgewandte Ende der Aufnahme 29 mündet in einer durchmesserangepassten Sacklochbohrung 30 im Bereich des Verriegelungsteils 17.

Weiter diesem, die Sacklochbohrung 30 aufweisenden Ende des Einsteckabschnittes 27 ist das Verriegelungsteil 17 mit einer umlaufenden Radialstufe 31 versehen, deren Radius kleiner ist als der größte Radius des Verriegelungsteils 17. In Axialrichtung betrachtet erstreckt sich die Radialstufe 31 bevorzugt über ein Drittel bis ein Fünftel, weiter bevorzugt über ein Viertel der Länge l des Einsteckabschnittes 27.

Der insgesamt massiv ausgebildete Einsteckabschnitt 27 formt über einen Teilbereich seiner Länge Wandbereiche 37 aus. Diese sind etwa mittig in Längserstreckung des Einsteckabschnittes 27 angeordnet, formen weiter im Querschnitt betrachtet über den Querschnitt des Einsteckabschnittes 27 hinaus freikragende Betätigungsabschnitte 38 in Form sich in Umfangsrichtung erstreckender Flächenteile aus. Diese Betätigungsabschnitte 38 verlaufen im Querschnitt gekrümmt, weiter bevorzugt wandungsaußenseitig den Radius des Einsteckabschnittes 27 bzw. dessen Umfangsfläche 28 aufnehmend. Die beiden Betätigungsabschnitte 38 sind im Querschnitt betrachtet diametral gegenüberliegend angeordnet, dies weiter mit einer Erstreckung in Umfangsrichtung, die einen Öffnungswinkel zwischen den Betätigungsabschnitten 38 belässt, der bevorzugt 80° bis 100°, weiter bevorzugt 90° beträgt.

Das Lagerteil 18 ist in dem Gehäuse der Küchenmaschine 1 drehfest gehaltert. Hierbei handelt es sich bevorzugt um ein rotationssymmetrisches Teil, welches weiter bevorzugt insgesamt hohlzylinderartig gestaltet ist. Die Innenfläche 39 der Umfangswandung des Lagerteils 18 formt eine radial äußere Lagerstelle für den Einsteckabschnitt 27 des Verriegelungsteils 17.

Das Lagerteil 18 weist neben dem insbesondere durch die Innenfläche 39 angebotenen Abstützbereich für den Einsteckabschnitt 27 einen weiteren Abstützbereich auf, welcher über den Abstützbereich im Bereich der Innenfläche 39 mit Bezug auf die Drehachse y nach radial Innen versetzt, sowie weiter in Drehachsrichtung betrachtet in Richtung auf das Verriegelungsteil 17 axial versetzt ausgebildet ist. In diesem Abstützbereich stützt sich insbesondere der Einsteckabschnitt 27 des Verriegelungsteiles 17 etwa im Übergang der Sacklochbohrung 30 zur Radialstufe 31 ab.

Dieser weitere Abstützbereich ist durch einen ersten Lagerteilabschnitt 19 gebildet, der einem zweiten Lagerteilabschnitt 25 zur Ausformung des Lagerteiles 18 insgesamt zuordbar ist. Der Lagerteilabschnitt 25 ist hierbei bevorzugt gehäusefest gehaltert, weist hierbei die vorbeschriebene Innenfläche 39 auf, sowie weiter eine an die Querschnittsgestaltung der Radialstufe 31 des Verriegelungsteiles 17 angepasste Stufenausnehmung 32, die eine zumindest winkelbegrenzte Drehung des Verriegelungsteiles 17 relativ zu dem Lagerteilabschnitt 25 erlaubt.

Der Lagerteilabschnitt 19 liegt bevorzugt als in dem weiteren Lagerteilabschnitt 25 einfügbares Steckteil vor, insbesondere einen Einsteckzapfen 33 und einen bevorzugt einstückig und materialeinheitlich mit diesem ausgeformten, insbesondere kugelkopfartigen Exzenter 34 aufweisend.

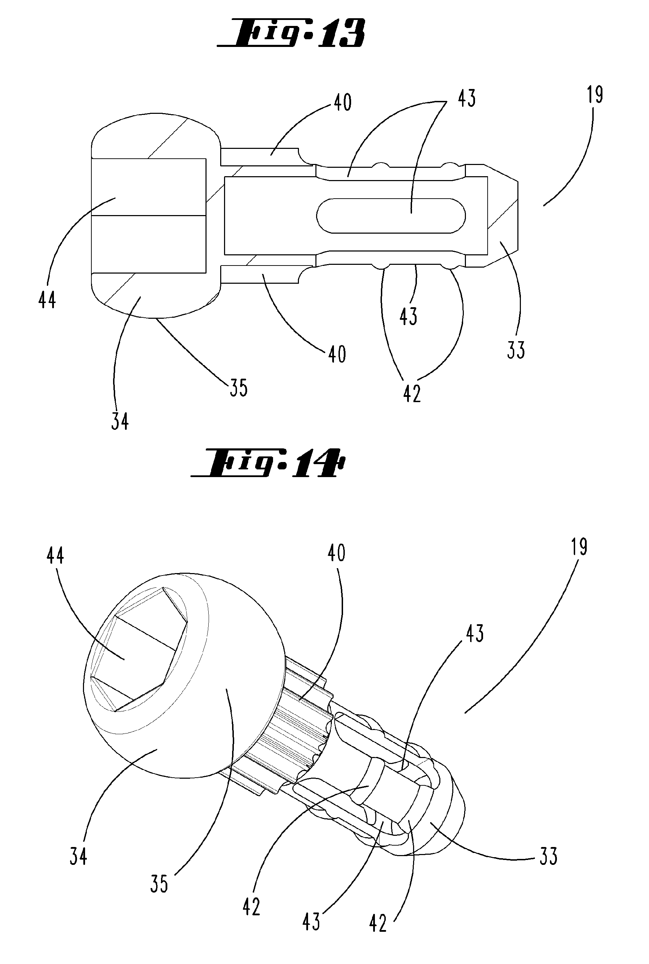

Der Einsteckzapfen 33 nimmt hierbei mit Bezug auf einen Querschnitt mittig eine Lagerteilabschnitt-Achse auf, welche zugleich den Exzenter 34 durchsetzt. Die mit Bezug auf diese Achse umlaufende, nach radial außen gerichtete Exzenterfläche 35 verläuft exzentrisch zu der Achse, wobei mit Bezug auf einen Längsschnitt gemäß Figur 13 die Exzenterfläche 35 ballig, entsprechend kugelabschnittförmig geformt ist.

Der Einsteckzapfen 33 ist insbesondere hinsichtlich seines Durchmessers so gewählt, dass dieser insbesondere zur kraftschlüssigen, darüber hinaus jedenfalls auch zur formschlüssigen Zusammenwirkung mit einer, die zentrale Achse des weiteren Lagerteilabschnittes 25 aufnehmenden Axialbohrung 36 zusammenwirken kann.

Die Exzenterfläche 35 steht über den gesamten Umfang betrachtet radial über die größte Radialerstreckung des Einsteckzapfens 33.

In dem, dem Exzenter 34 zugewandten Endbereich ist der Einsteckzapfen 33 wandungsaußenseitig mit Blockierungsausformungen 40 in Form einer umlaufenden Verzahnung versehen. Diese Blockierungsausnehmungen 40 greifen in der Einsteckstellung des Einsteckzapfens 33 in der Axialbohrung 36 des weiteren Lagerteilabschnittes 25 in entsprechend ausgebildete, hier bevorzugt die Zahnform aufnehmende Blockierungsaufnahmen 41 im Bereich der Axialbohrung 36 ein. Hierdurch ist im einsteckten Zustand des Einsteckzapfens 33 eine Verdrehsicherung des Lagerteilabschnittes 19 gegeben.

Der insgesamt bevorzugt als Hohlkörper ausgebildete Einsteckzapfen 33 weist in weiter bevorzugter Ausgestaltung wandungsaußenseitig zwei in Axialrichtung betrachtet zueinander beabstandete, umlaufende Rippen 42 auf. Weiter ist im Bereich der Rippen, insbesondere außerhalb des die Blockierungsausformungen 40 aufweisenden Bereiches die Wandung des Einsteckzapfens 33 geschlitzt, insbesondere durch axial ausgerichtete Schlitze 43. Bevorzugt sind diesbezüglich über den Umfang gleichmäßig verteilt vier solcher Schlitze 43 vorgesehen.

Ausgehen von dem, dem Einsteckzapfen 33 abgewandten Ende des beweglichen Lagerteilabschnitte 19 erstreckt sich von dieser Stirnseite des Exzenters 34 in Axialrichtung eine Werkzeugaufnahme 44 in Form eines bevorzugten Innensechskantes.

Für den ordnungsgemäßen Betrieb des Verriegelungssystems ist es notwendig, dass die Gefäßaufstandsebene A im Bereich der Gefäßaufnahme 5 zu den bevorzugt zwei Verriegelungsteilen 17, insbesondere zu deren Drehachsen innerhalb einer vorgegebenen Parallellitätstoleranz liegt. Um dies zu erreichen, ist es notwendig, die endgültige Winkellage des mit dem Lagerteil 18 verbundenen Verriegelungsteiles 17 zu beeinflussen. Um entsprechend die, durch die Einzelund Montagetoleranzen, hervorgerufenen Winkelverzüge insbesondere bezüglich der Längsachse des Verriegelungsteiles 17 relativ zu der Drehachse y, welche insbesondere durch die Ausrichtung des Lagerteiles 18 gegeben ist, auszugleichen, ist das Lagerteil 18 zumindest zweigeteilt, insbesondere zur Ausbildung des beweglichen, dem im Gehäuse festgelegten Lagerteilabschnitt 25 zuordbaren Lagerteilabschnitt 19.

Insbesondere im Zuge einer Montage der Küchenmaschine 1 wird eine mögliche Achsabweichung im Bereich der Drehlagerstellen der Verriegelungsteile 17 ermittelt, dies weiter bevorzugt bei mit Ausnahme der Verriegelungsteile 17 vollständigem Zusammenbau der Küchenmaschine 1.

Bevorzugt liegen zum Ausgleich von Achstoleranzen Lagerteilabschnitte 19 in unterschiedlichen Abmessungen, insbesondere mit unterschiedlicher Konzentrizität des Exzenters 34 relativ zur Zapfenachse vor, um den entsprechenden Winkelversatz auszugleichen. Dabei beeinflusst die Höhe der Konzentrizität die Größe des Riegelversatzes; die rotatorische Lage des Exzenters 34 gleicht den räumlichen Versatz aus.

Der ermittelte Lagerteilabschnitt 19 wird durch Verdrehen um dessen Längsachse in die entsprechende Winkellage verbracht und in Fügerichtung, d.h. in Axialrichtung, in die Gegengeometrie des festen Lagerteilabschnittes 25 eingeschoben.

Zufolge der vorgesehenen Schlitze 43 im Bereich des Einsteckzapfens 33 und zufolge der umlaufenden Rippen 42 wird der Einsteckzapfen 33, eingreifend in die Axialbohrung 36, elastisch verformt, womit der Lagerteilabschnitt 19 gegen unbeabsichtigte Entnahme beziehungsweise unbeabsichtigtes Abziehen in Axialrichtung gesichert ist. Die Blockierungsausformung 40 (Vielzahnprofil) greift in die Blockierungsaufnahmen 41 ein, womit weiter eine Verdrehsicherung gegeben ist.

Mit Hilfe der Werkzeugaufnahme 44 ist unter Nutzung eines entsprechend einzuführenden Werkzeuges eine günstige Handhabung, insbesondere Verdrehung des Lagerteilabschnittes 19 in die richtige Exzenterstellung ermöglicht.

Der exzentrische Versatz insbesondere der Exzenterfläche 35 relativ zu der Achse des beweglichen Lagerteilabschnittes 19 führt zu einer Winkelverschiebung, die die Lage des sich auf dem Exzenter 34 abstützenden Verriegelungsteiles 17 relativ zu der Gefäßaufstandsebene A des Gefäßes 6 beeinflusst.

In der Montagestellung liegen die Betätigungsabschnitte 38 des Einsteckabschnitts 27 in einer Öffnung 45 des Lagerteils 18 beziehungsweise des festen Lagerteilabschnittes 25 zur Betätigung frei. An diese Betätigungsabschnitte 38 greift bevorzugt ein nicht dargestellter, elektromotorisch betätigter Hebel, zur Drehverlagerung des Verriegelungsteils 17 aus einer Deckelfreigabestellung in eine Verriegelungsstellung und umgekehrt, dies zufolge entsprechender Einwirkung auf die einsteckabschnitteitigen Betätigungsabschnitte 38.

Zum Betrieb der Küchenmaschine 1 wird der Deckel 10 aufgelegt, dies unter unmittelbarer Abstützung des Deckelrandes 16 auf dem Gefäßrand 13, ggf. mittelbar unter Zwischenschaltung einer Dichtung.

Zufolge Drehverlagerung des Verriegelungsteils 17 werden die in Axialrichtung zueinander distanzierten Übergreifabschnitte 21 über den Deckelrand 16 verlagert bis hin in eine Endstellung gemäß Fig. 4, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die erwähnte Radialdichtung sichergestellt.

Wie weiter bevorzugt sind zwei Verriegelungsteile 17 vorgesehen, die mit Bezug auf eine Draufsicht gemäß Fig. 3 gegenüberliegend angeordnet sind, dies bei bevorzugter paralleler Ausrichtung der Drehachsen y zueinander. Zufolge dieser Anordnung ist bedingt durch die jeweils zwei ausgebildeten Übergreifabschnitte 21 je Verriegelungsteil 17 eine insgesamt Vier-Punkt-Verriegelung des Deckels 10 erreicht. Hieraus ergibt sich, dass sich das Gargefäß 6 über den Gargefäßrand 13 zunächst auf zwei um 180° gegenüberliegenden Auflagenbereichen 23 abstützt, so dass mit Bezug auf eine Draufsicht die die Verriegelungsbereiche miteinander verbindenden Linien sich im Bereich der Vertikalachse x des Gefäßes 6 schneiden, wobei weiter der Schnittpunkt der Verbindungslinien senkrecht oberhalb des Gefäßschwerpunktes liegt. Hierdurch wird erreicht, dass das Gefäß 6 kein abstützendes Kippmoment aufbaut, welches an anderer Stelle abgestützt werden müsste.

Insbesondere zufolge der in Erstreckungsrichtung der Drehachse y zueinander beabstandet ausgebildeten Übergreifabschnitte 21 bzw. Verriegelungsbereiche ist erreicht, dass der Kraftfluss von den Auflagebereichen 23 der Verriegelungsteile 17 unter den Gefäßrand 13 durch das jeweilige Verriegelungsteil 17 zu den Übergreifabschnitten 21 und darüber auf den Deckel 10 aufgebracht werden. Hierdurch werden in dem dargestellten Ausführungsbeispiel vier Andruckstellen auf dem Umfang des Deckels 10 gebildet. Gefäß 6 sowie die Verriegelungsteile 17 weisen die notwendige Steifigkeit für die Verteilung der Kraft auf, was in vorteilhafter Weise zu einer Erweiterung der Werkstoffwahl für den Deckel 10 führt.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Eine Küchenmaschine 1, die dadurch gekennzeichnet ist, dass das Lagerteil 18 in seiner Längsrichtung mehrteilig ausgebildet ist und dass ein das Verriegelungsteil 17 abstützender Lagerteilabschnitt 19 gegenüber einem weiteren Lagerteilabschnitt 25 zur axialen Ausrichtung des Verriegelungsteils 17 jedenfalls im Zuge der Montage unterschiedlich anbringbar ist.
Eine Küchenmaschine, die dadurch gekennzeichnet ist, dass ein Lagerteilabschnitt 19 als Exzenter ausgebildet ist.
Eine Küchenmaschine, die dadurch gekennzeichnet ist, dass ein Lagerteilabschnitt 19 in einer Längsrichtung des Lagerteils 18 mit dem anderen Lagerteilabschnitt 25 steckverbindbar ist.
Eine Küchenmaschine, die dadurch gekennzeichnet ist, dass der in Bezug auf das Verriegelungsteil 17 vordere Lagerteilabschnitt 19 unterschiedlich anbringbar ist.
Eine Küchenmaschine, die dadurch gekennzeichnet ist, dass der Lagerteilabschnitt 19 in seiner Längsrichtung außenseitig längs und/oder quer ausgerichtete Blockierungsausformungen 40 aufweist.
Eine Küchenmaschine, die dadurch gekennzeichnet ist, dass der feststehende Lagerteilabschnitt 25 zu den Blockierungsausformungen 40 entsprechend längs und/oder quer ausgerichtete Blockierungsaufnahmen 41 aufweist.
Eine Küchenmaschine, die dadurch gekennzeichnet ist, dass der bewegliche Lagerteilabschnitt 19 eine axial gerichtete Werkzeugaufnahme 44 aufweist.
Eine Küchenmaschine, die dadurch gekennzeichnet ist, dass sich die Werkzeugaufnahme 44 ausgehend von einer Stirnseite des freien Endes des beweglichen Lagerteilabschnittes 19 erstreckt.
Eine Küchenmaschine, die dadurch gekennzeichnet ist, dass die Werkzeugaufnahme 44 als Innenmehrkant ausgebildet ist.

**Bezugszeichenliste:**

| | | | |
|---|---|---|---|
| 1 | Küchenmaschine | 24 | Übergriff |
| 2 | Bedienfeld | 25 | Lagerteilabschnitt |
| 3 | Taster | 26 | Ende |
| 4 | Display | 27 | Einsteckabschnitt |
| 5 | Gefäßaufnahme | 28 | Umfangsfläche |
| 6 | Gefäß | 29 | Aufnahme |
| 7 | Rührwerk | 30 | Sacklochbohrung |
| 8 | Heizung | 31 | Radialstufe |
| 9 | Netzanschlusskabel | 32 | Stufenausnehmung |
| 10 | Deckel | 33 | Einsteckzapfen |
| 11 | Einfüllöffnung | 34 | Exzenter |
| 12 | Gefäßwandung | 35 | Exzenterfläche |
| 13 | Gefäßrand | 36 | Axialbohrung |
| 14 | Wölbungsfläche | 37 | Wandbereich |
| 15 | Kragen | 38 | Betätigungsabschnitt |
| 16 | Deckelrand | 39 | Innenfläche |
| 17 | Verriegelungsteil | 40 | Blockierungsausnehmung |
| 18 | Lagerteil | 41 | Blockierungsaufnahme |
| 19 | Lagerteilabschnitt | 42 | Rippe |
| 20 | Höhlung | 43 | Schlitz |
| 21 | Übergreifabschnitt | 44 | Werkzeugaufnahme |
| 22 | Höhlungsabschnitt | 45 | Öffnung |
| 23 | Auflagebereich | | |
| l | Länge | | |
| l' | Gesamtlänge | | |
| x | Vertikalachse | | |
| y | Drehachse | | |
| | | | |
| A | Gefäßaufstandsebene | | |
| E | Ebene | | |

## Patentansprüche

1. Elektrisch betriebene Küchenmaschine (1) mit einem Gargefäß (6) und einem Deckel (10) für das Gargefäß (6), wobei der Deckel (10) in der Verschlussstellung gegen das Gargefäß (6) verriegelbar ist, wobei weiter das Gargefäß (6) einen Gargefäßboden und eine sich vom Boden nach oben erstreckende Gargefäßwandung (12) aufweist und die Verriegelung aus einem zum Übergreifen des Deckels (10) bestehenden Verriegelungsteil (17) gebildet ist, das durch Drehen aus einer Freigabestellung in die Verriegelungsstellung und umgekehrt verlagerbar ist, wobei das Verriegelungsteil (17) mit einem gehäuseseitig abgestützten Lagerteil (18) steckverbunden ist, bei in einer Längsrichtung des Lagerteils (18) mehrfacher Abstützung des Verriegelungsteils (17) an dem Lagerteil (18), **dadurch gekennzeichnet, dass** das Lagerteil (18) in seiner Längsrichtung mehrteilig ausgebildet ist und dass ein das Verriegelungsteil (17) abstützender Lagerteilabschnitt (19) gegenüber einem weiteren Lagerteilabschnitt (25) zur axialen Ausrichtung des Verriegelungsteils (17) jedenfalls im Zuge der Montage unterschiedlich anbringbar ist.

2. Küchenmaschine nach Anspruch 1, **dadurch gekennzeichnet, dass** ein Lagerteilabschnitt (19) als Exzenter ausgebildet ist.

3. Küchenmaschine nach einem der vorhergehenden Ansprüche, **dadurch gekennzeichnet, dass** ein Lagerteilabschnitt (19) in einer Längsrichtung des Lagerteils (18) mit dem anderen Lagerteilabschnitt (25) steckverbindbar ist.

4. Küchenmaschine nach einem der vorhergehenden Ansprüche, **dadurch gekennzeichnet, dass** der in Bezug auf das Verriegelungsteil (17) vordere Lagerteilabschnitt (19) unterschiedlich anbringbar ist.

5. Küchenmaschine nach einem der vorhergehenden Ansprüche, **dadurch gekennzeichnet, dass** der Lagerteilabschnitt (19) in seiner Längsrichtung außenseitig längs und/oder quer ausgerichtete Blockierungsausformungen (40) aufweist.

6. Küchenmaschine nach einem der vorhergehenden Ansprüche, **dadurch gekennzeichnet, dass** der feststehende Lagerteilabschnitt (25) zu den Blockierungsausformungen (40) entsprechend längs und/oder quer ausgerichtete Blockierungsaufnahmen (41) aufweist.

7. Küchenmaschine nach einem der vorhergehenden Ansprüche, **dadurch gekennzeichnet, dass** der bewegliche Lagerteilabschnitt (19) eine axial gerichtete Werkzeugaufnahme (44) aufweist.

8. Küchenmaschine nach Anspruch 7, **dadurch gekennzeichnet, dass** sich die Werkzeugaufnahme (44) ausgehend von einer Stirnseite des freien Endes des beweglichen Lagerteilabschnittes (19) erstreckt.

9. Küchenmaschine nach Anspruch 7 oder 8, **dadurch gekennzeichnet, dass** die Werkzeugaufnahme (44) als Innenmehrkant ausgebildet ist.

10. Küchenmaschine, **gekennzeichnet durch** eines oder mehrere der kennzeichnenden Merkmale eines der vorhergehenden Ansprüche.
